# EUROPÄISCHE PATENTSCHRIFT

(11) **EP 0 512 324 B1**
(45) Veröffentlichungstag und Bekanntmachung des Hinweises auf die Patenterteilung: **12.10.1994**
(21) Anmeldenummer: 92106889.6
(22) Anmeldetag: 22.04.1992
(51) Int. Cl.: B65G 53/46, F16K 3/16, F16K 5/14

(54) **Absperrvorrichtung**
Closure device
Dispositif d'arrêt

(30) Priorität: 07.05.1991 DE 4114902
(43) Veröffentlichungstag der Anmeldung: 11.11.1992
(73) Patentinhaber: KRUPP POLYSIUS AG, 59269 Beckum (DE)
(72) Erfinder: Dreising, Paul, Dipl.-Ing., W-4780 Lippstadt 12 (DE); Thöne, Ludger, Dipl.-Ing., W-4740 Oelde (DE)
(74) Vertreter: Tetzner, Volkmar, Dr.-Ing. Dr. jur.

(56) Entgegenhaltungen:
- DE-A- 2 623 822
- DE-B- 1 500 058
- DE-B- 1 600 989

## Beschreibung

Die Erfindung betrifft eine Absperrvorrichtung zum Einbau in eine pneumatische Förderleitung für unter Druck stehendes pulverförmiges bis feinkörniges Fördergut, entsprechend dem Oberbegriff des Anspruches 1.

Eine Absperrvorrichtung dieser vorausgesetzten Art ist beispielsweise aus der DE-B- 16 00 989 in Form eines Flachschiebers bekannt. In diesem Falle sind die aufblähbaren Dichtungselemente in Ringnuten des Schiebergehäuses angeordnet, die unter Ausbildung eines trapezförmigen Querschnittes hinterschnitten sind. In diese Ringnuten sind die in ihrem äußeren Querschnitt ebenfalls etwa trapezförmig ausgebildeten Dichtungselemente so eingelegt, daß beim Anlegen eines Innendruckes sich die Dichtungselement-Schenkel an die schrägen Seitenwände der Ringnuten anpressen sollen. Wenn bei dieser bekannten Ausführungsform eine als Absperrorgan wirkende Schieberplatte beispielsweise aus ihrer Absperrstellung in ihre Freigabestellung geschoben werden soll, dann wird zunächst der Innendruck der Dichtungselemente ganz oder teilweise aufgehoben, woraufhin die Schieberplatte frei verschoben werden kann; daraufhin wird erneut Druckmedium in die Dichtungselemente eingeführt, d.h. diese Dichtungselemente werden wieder aufgebläht, damit deren Dichtungsflächen wieder gegen die Außenseiten der Schieberplatte in Dichtungseingriff gedrückt werden können.

In der Praxis hat sich nun gezeigt, daß bei einer längeren Druckbelastung in den bekannten Absperrvorrichtungen die Dichtungselemente nicht immer ausreichend zuverlässig im Vorrichtungsgehäuse bzw. in dessen ringförmigen Ausnehmungen fixiert sind, was vor allem bei pneumatischen Förderleitungen mit sehr hohen Förderdrücken der Fall sein kann; die Dichtungselemente können sich daher zumindest teilweise aus ihren Ringausnehmungen lösen und dadurch zu einem Blockieren des Absperrorgans führen.

Der Erfindung liegt daher die Aufgabe zugrunde, eine Absperrvorrichtung der im Oberbegriff des Anspruches 1 vorausgesetzten Art in der Weise zu verbessern, daß selbst bei relativ hohen pneumatischen Förderdrücken die Dichtungselemente in ihren Gehäuseausnehmungen einwandfrei dichtend sowie äußerst zuverlässig festgelegt sind.

Diese Aufgabe wird erfindungsgemäß durch die im Kennzeichen des Anspruches 1 angegebenen Merkmale gelöst.

Vorteilhafte Ausgestaltungen und Weiterbildungen dieser Erfindung sind Gegenstand der Unteransprüche.

Bei dieser erfindungsgemäßen Ausbildung weist somit jedes Dichtungselement im Bereich seiner am Ausnehmungsboden anliegenden Rückseite sowohl an seiner Innenumfangsseite (Innenumfangswand) als auch an seiner Außenumfangsseite (Außenumfangswand) je einen umlaufenden, flanschartig vorstehenden Klemmdichtungswulst auf. Dabei liegt an der Außenumfangsseite jedes Dichtungselements ein äußerer Fixierring und an der Innenumfangsseite jedes Fixierelements ein innerer Fixierring eng an, und diese beiden Fixierringe weisen Ringnuten auf, die die benachbart zu ihnen liegenden Klemmdichtungswülste fest übergreifen, wobei diese Fixierringe lösbar in der zugehörigen Gehäuseausnehmung festgelegt sind. Durch diese Art der festklemmenden und abdichtenden Festlegung ist selbst in solchen Fällen eine einwandfreie Abdichtung einerseits und eine äußerst zuverlässige und dauerhafte Klemmverbindung der Dichtungselemente andererseits gewährleistet, wenn diese erfindungsgemäße Absperrvorrichtung im Bereich ihres Absperrorgans relativ hohen pneumatischen Förderdrücken ausgesetzt wird. Diese äußerst zuverlässige Abdichtung wirkt sich aber auch bei den Dichtungselementen selbst vorteilhaft aus, wenn diese ebenfalls mit relativ hohem Innendruck von dem Druckmedium beaufschlagt werden, d.h. es besteht für diese Dichtungselemente keine Möglichkeit, sich aus ihren Gehäuseausnehmungen herauszulösen oder im Bereich ihrer am Ausnehmungsboden anliegenden Rückseite undicht zu werden.

Wie anhand von Ausführungsbeispielen noch näher erläutert werden wird, kann diese erfindungsgemäße Ausbildung an verschiedenen Ausführungsformen von Absperrvorrichtungen Verwendung finden, insbesondere bei Ausführungsarten, bei denen das Absperrorgan in Form eines Schiebers mit hin- und herverschiebbarer Schieberplatte oder auch in Form eines rotationssymmetrischen Absperrkörpers ausgebildet ist, z.B. bei Drehschiebern, Kugelhähnen oder dgl.

Die Erfindung sei nachfolgend anhand der Zeichnung näher erläutert. In dieser Zeichnung zeigen:
- Fig.1: einen Querschnitt durch eine erste Ausführungsform der erfindungsgemäßen Absperrvorrichtung in Form eines Flachschiebers;
- Fig.2 bis 4: gleichartige Querschnittsansichten wie in Fig.1, jedoch zur Erläuterung verschiedener Betriebszustände;
- Fig.5: eine Querschnittsansicht, ähnlich der in Fig. 1, jedoch zur Erläuterung einer besonderen Ausführungsvariante des Flachschiebers;
- Fig.6: eine Querschnittsansicht durch ein anderes Ausführungsbeispiel der Absperrvorrichtung in Form eines Drehschiebers.

Ganz allgemein sei zu den Darstellungen in allen Zeichnungsfiguren noch gesagt, daß darin lediglich die zur Erläuterung der vorliegenden Erfindung notwendigen Teile veranschaulicht sind, d.h. notwendige Befestigungsflansche, Verbindungselemente, Anschlußelemente usw. sind im wesentlichen der Einfachheit halber weggelassen worden.

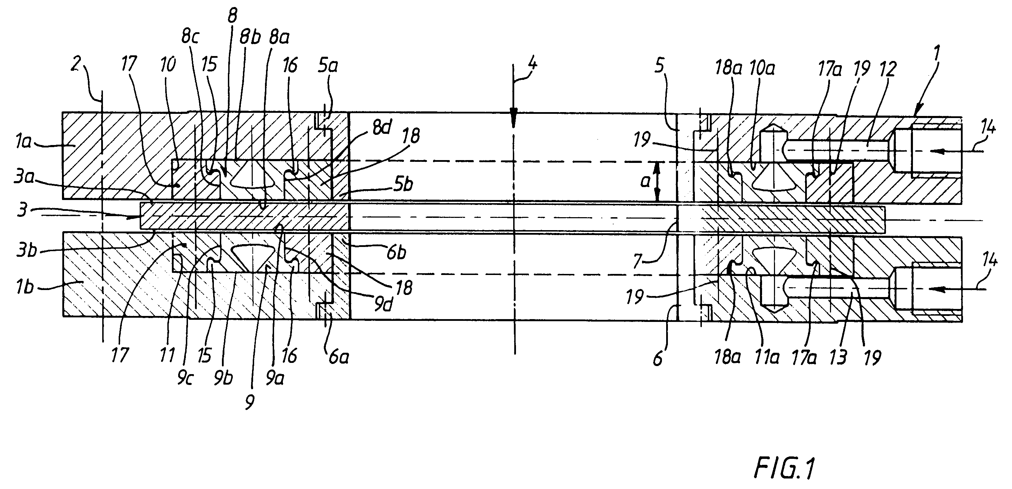

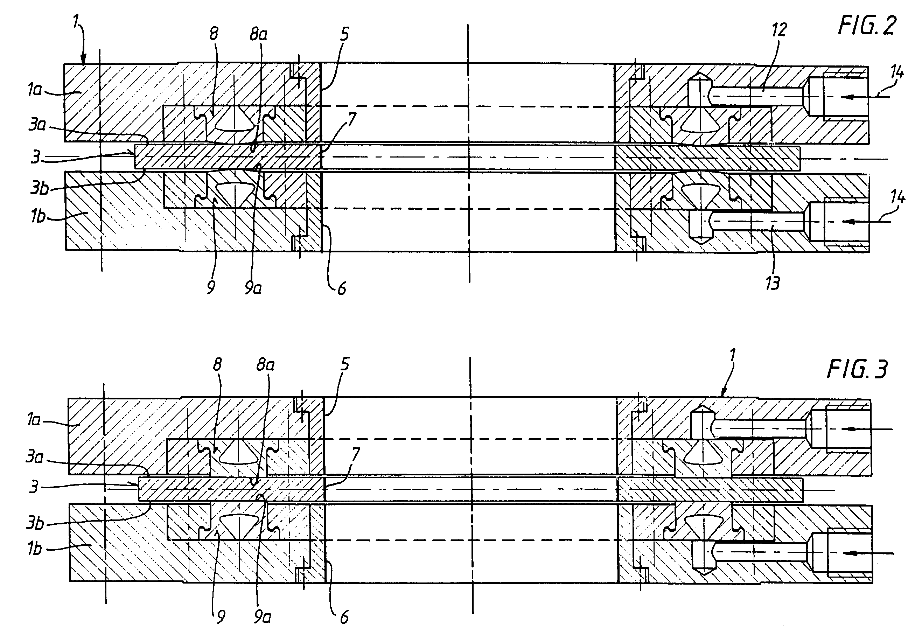

Anhand der Fig.1 sei zunächst das in den Fig.1 bis 4 veranschaulichte Ausführungsbeispiel der Absperrvorrichtung in Form eines Absperrschiebers im einzelnen erläutert, wobei in den Fig. 2 bis 4 die gleichen Konstruktionsteile vorhanden und somit mit denselben Bezugszeichen versehen sind.

In Fig.1 ist das zu diesem Flachschieber gehörende Schiebergehäuse 1 in an sich bekannter Weise zweiteilig mit den Gehäuseteilen 1a und 1b ausgeführt; diese beiden Gehäuseteile 1a und 1b können - wie bei 2 nur strichpunktiert angedeutet - in geeigneter Weise lösbar miteinander verschraubt sein. Zwischen diesen beiden Schiebergehäuseteilen 1a und 1b ist eine ein Absperrorgan bildende Schieberplatte 3 angeordnet und in geeigneter Weise derart geführt, daß sie senkrecht zur gleichen Ebene der Fig. 1 hin- und herverschoben werden kann, wie im einzelnen noch näher erläutert wird.

Im Schiebergehäuse 1 sind zwei einer nicht näher veranschaulichten pneumatischen Förderleitung im Querschnitt angepaßte Rohranschlüsse vorzugsweise etwa mittig vorgesehen, und zwar ist - unter der Annahme, daß pneumatisch zu förderndes Gut in Richtung des Pfeiles 4 durch diesen Absperrschieber hindurchgefördert werden kann - gemäß Fig.1 im oberen Gehäuseteil 1a ein Eingangs-Rohranschluß 5 und im unteren Gehäuseteil 1b ein Ausgangs-Rohranschluß 6 ausgebildet, wobei beide Rohranschlüsse 5 und 6 sich koaxial einander gegenüberliegen. Da vielfach mit relativ aggresivem Fördergut zu rechnen ist, wird es vorgezogen, jeden dieser beiden Rohranschlüsse 5, 6 gleichartig und in Form einer auswechselbaren geraden Verschleißbuchse auszubilden. Demnach weisen die Rohranschlüsse 5, 6 an ihren axial äußeren Enden jeweils eine Art Befestigungsflansch 5a bzw. 6a auf, während ihre geraden inneren Enden 5b bzw. 6b von der dazwischengeschobenen Schieberplatte 3 nur einen so geringen Abstand aufweisen, daß diese Schieberplatte 3 problemlos zwischen ihnen hindurchbewegt und gegebenenfalls gleichzeitig geführt werden kann.

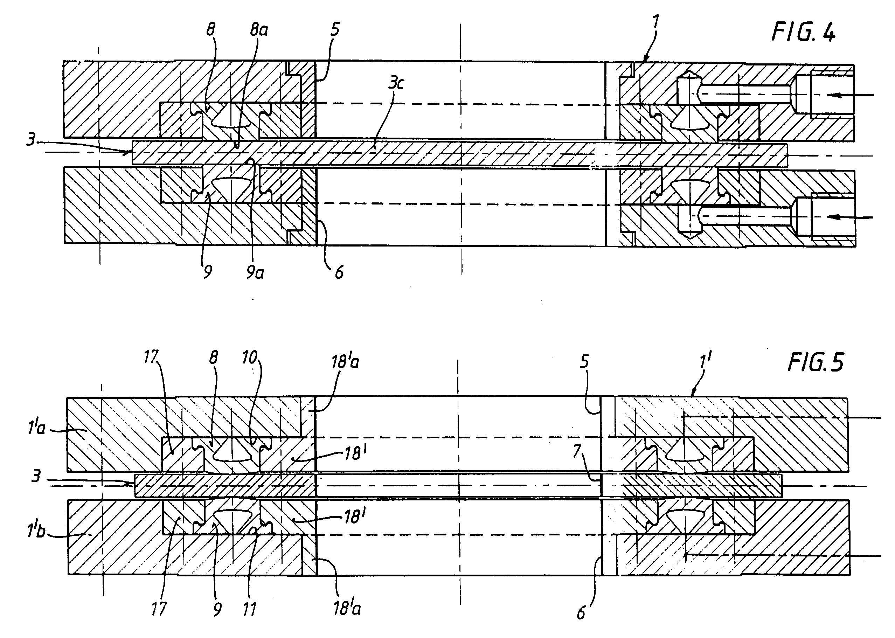

Bei der Schieberplatte 3 sei angenommen, daß es sich hier in an sich bekannter Weise um eine flache (ebene) oder gegebenenfalls auch - in der Richtung senkrecht zur Zeichenebene der Fig.1 - leicht gebogene Platte handeln kann. In jedem Falle weist diese Schieberplatte - in ihrer Querrichtung gemäß Fig.1 betrachtet - eine mittige Durchgangsöffnung 7 auf, deren lichter Querschnitt - wie Fig.1 zeigt - genau dem lichten Querschnitt der Eingangs- und Ausgangs-Rohranschlüsse 5, 6 entspricht. Darüberhinaus ist diese Schieberplatte 3 in ihrer Längsabmessung, d.h. senkrecht zur Zeichenebene der Fig.1 betrachtet, so lang ausgeführt, daß sie aus der in Fig.1 gezeigten Freigabestellung für den freien Fördergutdurchgang durch die Rohranschlüsse 5, 6 - senkrecht zur Zeicheneben der Fig.1 - soweit verschoben werden kann, daß sie in eine Absperrstellung (entsprechend Darstellung in Fig. 4) verschoben werden kann, in der der freie Fördergutdurchgang durch die Rohranschlüsse 5, 6 und somit durch den Absperrschieber vollkommen abgesperrt ist. Wie dieses Hin- und Herverschieben dieser Schieberplatte 3 im einzelnen erfolgt, d.h. manuell oder mittels geeigneter Antriebe, spielt für die vorliegende Erfindung keine Rolle, und ist im übrigen Stand der Technik.

Da das Fördergut in pneumatischen Förderleitungen vielfach mit relativ hohen Förderdrücken gefördert wird, ist eine geeignete zuverlässige und dauerhafte Abdichtung der Schieberplatte 3 im Schiebergehäuse 1 von besonderer Bedeutung. Bei dem in Fig.1 veranschaulichten Flachschieber ist der Oberseite 3a und der Unterseite 3b der Schieberplatte 3 je ein ringförmiges, aufblähbares, gummielastisches Dichtungselement 8 bzw. 9 zugeordnet, wobei das - in Fig.1 - obere Dichtungselement 8 den Eingangs-Rohranschluß 5 und das untere Dichtungselement 9 den Ausgangs-Rohranschluß 6 ringförmig umgibt. Das Dichtungselement 8 ist in einer zur Außen- bzw. Oberseite 3a der Schieberplatte 3 hin offenen, ringförmigen (oberen) Ausnehmung 10 im Gehäuseteil 1a und das Dichtungselement 9 ist in einer zur Außen- bzw. Unterseite 3b der Schieberplatte 3 hin offenen, ringförmigen Ausnehmung 11 im (unteren) Gehäuseteil 1b angeordnet, wobei diese Ausnehmungen einen vorzugsweise rechteckigen Querschnitt aufweisen, der gemäß Fig.1 auf der radial inneren Seite durch die entsprechenden Rohranschlüsse 5 bzw. 6 begrenzt ist. Jedes dieser beiden Dichtungselemente 8, 9 ist in der Weise gewissermaßen als Hohlprofil ausgebildet, daß es eine gegen die Schieberplatte 3 weisende, geschlossene Dichtungsfläche 8a bzw. 9a, eine dazu entgegengesetzte, wenigstens teilweise, vorzugsweise durchgehend schlitzförmig offene Rückseite 8b bzw. 9b sowie eine ebenfalls geschlossene radial äußere Umfangsseite 8c bzw. 9c und innere Umfangsseite 8d bzw. 9d besitzt. Die im wesentlichen offene Rückseite 8b bzw. 9b jedes Dichtungselements 8, 9 liegt am Boden 10a bzw. 11a der zugehörigen ringförmigen Ausnehmung 10 bzw. 11 direkt an. Dabei ist an jeden Ausnehmungsboden 10a, 11a in an sich bekannter Weise ein Druckmediumkanal, vorzugsweise ein Druckluftkanal 12 bzw. 13 angeschlossen, über den jeweils - wie durch Pfeile 14 angedeutet - ein geeignetes Druckmedium, vorzugsweise Druckluft, in der Weise zugeführt werden kann, daß die Dichtungselemente 8, 9 aufgebläht und dadurch ihre Dichtungsflächen 8a bzw. 9a gegen die ihnen zugewandten Außenseiten (Oberseite 3a, Unterseite 3b) der Schieberplatte 3 in festen Dichtungseingriff gedrückt werden können.

Jedes Dichtungselement 8, 9 weist nun im Bereich seiner Rückseite 8b bzw. 9b sowohl an seiner Innenumfangsseite 8d bzw. 9d als auch an seiner Außenumfangsseite 8c bzw. 9c je einen umlaufenden, flanschartig nach außen bzw. innen vorstehenden Klemmdichtungswulst 15, 16 auf, die gewissermaßen eine innere und äußere flanschartige Verbreiterung der Rückseiten 8b und 9b darstellen und somit ebenfalls am Boden 10a, 11a der zugehörigen Gehäuseausnehmung 10 bzw. 11 anliegen. Im durckentspannten Zustand, wie er in Fig.1 veranschaulicht ist, weist somit jedes Dichtungselement 8, 9 die äußere Grundform eines regelmäßigen Rechteckes auf, das an seiner einen Seite, nämlich an der Rückseite, durch die Klemmdichtungswülste 15, 16 flanschartig verbreitert ist, während die Dichtungsflächen 8a und 9a glatte, ebene Flächen bilden.

Wie Fig.1 ferner erkennen läßt, ist zu beiden Umfangsseiten jedes Dichtungselements 8, 9 je ein Fixierring 17 bzw. 18 ebenfalls innerhalb der zugehörigen Gehäuseausnehmung 10 bzw. 11 angeordnet. Dabei liegt an der Außenumfangsseite 8c, 9c jedes Dichtungselements 8 bzw. 9 je ein äußerer Fixierring 17 und an der Innenumfangsseite 8d, 9d jedes Dichtungselements 8, bzw. je ein innerer Fixierring 18 eng an. Jeder dieser Fixierringe 17, 18 weist an seiner dem Dichtungselement zugewandten Umfangsseite sowie in der Nähe des Ausnehmungsbodens 10a, 11a eine darin eingearbeitete Ringnut 17a bzw. 18a in der Weise auf, daß von diesen Ringnuten 17a, 18a die jeweils zugehörigen bzw. benachbarten Klemmdichtungswülste 15, 16 des zugehörigen Dichtungselements 8 bzw. 9 fest übergriffen werden können. Die Querschnitte jedes Dichtungselements 8, 9 und jedes Fixierringes 17, 18 sind so aufeinander abgestimmt, daß jedes Dichtungselement 8, 9 im druckentspannten Zustand (Darstellung in Fig.1) zusammen mit den an seinen beiden Umfangsseiten 8c, 8d bzw. 9c, 9d eng anliegenden Fixierringen 17, 18 einen gemeinsamen Querschnitt bilden, der den lichten Querschnitt der zugehörigen Gehäuseausnehmung 10 bzw. 11 vollständig und bündig (zu den Ausnehmungsrändern) ausfüllt, wie es in Fig.1 gut zu erkennen ist. Die maximale axiale Abmessung (z.B. a in Fig.1) der beiden Fixierringe 17, 18 stimmt somit genau mit der Tiefe der Gehäuseausnehmungen 10, 11 überein. Dagegen sind die entsprechenden maximalen axialen Abmessungen jedes Dichtungselements 8, 9 im druckentspannten Zustand vorzugsweise derart etwas größer gewählt, daß deren Klemmdichtungswülste 15, 16 - in ihrer Materialdicke - von den Ringnuten 17a, 18a der zugehörigen Fixierringe 17 bzw. 18 beim Zusammenbau komprimiert und dadurch zuverlässig abdichtend festgeklemmt werden. Die Fixierringe 17, 18 sind in den zugehörigen Gehäuseausnehmungen 10, 11 lösbar festgelegt, vorzugsweise mittels nur durch strickpunktierte Linien angedeuteter Schrauben 19 lösbar verschraubt.

Es sei noch erwähnt, daß jeder Fixierring 17, 18 in jeweils geeigneter Weise vollkommen einstückig ausgeführt oder im Bedarfsfalle auch aus wenigstens zwei in Umfangsrichtung eng aneinander anliegenden Ringsektoren gebildet sein kann, ohne daß dies im einzelnen veranschaulicht werden muß.

Ferner sei noch betont, daß die die Rohranschlüsse 5, 6 bildenden Verschleißbuchsen jeweils an der Innenumfangsseite des benachbarten inneren Verschleißringes 18 eng anliegend angeordnet sind.

Zum besseren Verständnis der Gesamtfunktion des bisher erläuterten Absperrschiebers seien anhand der Fig.1 bis 4 einige Betriebszustände erläutert:
In Fig.1 sei angenommen (wie z.T. bereits erwähnt), daß die ringförmigen Dichtungselemente 8, 9 sich in ihrem druckentspannten Zustand befinden, d.h. über die Druckluftkanäle 12, 13 wird keine Druckluft zugeführt, sondern diese Druckluftkanäle 12, 13 sind vorzugsweise - über nicht näher erläuterte, aber an sich bekannte - Steuerventile an Atmosphäre angeschlossen; im Bedarfsfalle könnten sie evtl. auch an eine Unterdruckquelle angeschlossen werden, um die Dichtungen besonders zuverlässig entlasten bzw. zurückziehen zu können, was jedoch im allgemeinen hier nicht notwendig ist. In diesem druckentlasteten Zustand gemäß Fig.1 kann die Schieberplatte 3 in der jeweils gewünschten Weise senkrecht zur Zeichenebene der Fig.1 verschoben werden, so daß sich ihre Durchgangsöffnung 7 dann entweder in ihrer Freigabestellung für einen freien Fördergutdurchgang (gemäß Darstellung in den Fig.1 bis 3) oder in ihrer Absperrstellung (gemäß Darstellung in Fig.4) befindet.

Unter der Annahme, daß der Absperrschieber 3 in der Freigabestellung für seine Durchgangsöffnung 7 eingestellt bleiben soll, wird gemäß Fig.2 ein Druckmedium (Pfeile 14) über die Druckluftkanäle 12, 13 in das Innere der Dichtungselemente 8, 9 eingeführt, wodurch diese Dichtungselemente 8, 9 so aufgebläht werden, daß sich ihre Dichtungsflächen 8a bzw. 9a an die ihnen gegenüberliegenden Seiten 3a bzw. 3b der Schieberplatte 3 andrücken und dadurch den Dichtungseingriff mit dieser Schieberplatte 3 herstellen. Bei der Darstellung in Fig.2 sei angenommen, daß in der pneumatischen Förderleitung, in die dieser Absperrschieber eingebaut sein soll, mit relativ niedrigem Förderdruck gearbeitet wird, weshalb auch nur ein relativ geringer Innendruck in den Dichtungselementen 8, 9 erforderlich ist; es genügt daher, wenn die Dichtungsflächen 8a, 9a der Dichtungselemente 8, 9 nur ballig (wie dargestellt) aufgebläht bzw. verformt sind und dementsprechend gegen die Schieberplatte 3 gedrückt sind.

Da in pneumatischen Förderleitungen das Gut sehr häufig mit relativ hohen Förderdrücken gefördert wird, ist es dann auch zweckmäßig, in den Dichtungselementen 8, 9 einen höheren Innendruck aufzubauen, und zwar in Abstimmung auf den Förderdruck in der zugehörigen pneumatischen Förderleitung. Bei diesen hohen Förderdrücken und bei entsprechend hohen Innendrücken in den Dichtungselementen 8, 9 werden sich die Dichtungsseiten 8a bzw. 9a dementsprechend im wesentlichen ganzflächig an die ihnen zugewandten Außenseiten 3a bzw. 3b der Schieberplatte 3 anlegen, wie es in Fig.3 veranschaulicht ist. Auf diese Weise wird auch bei sehr hohen Förderdrücken eine besonders hohe Zuverlässigkeit der Abdichtung zwischen den Dichtungselementen 8, 9 und der Schieberplatte 3 erreicht. In allen Fällen ist jedoch durch die Art der gewählten Klemmdichtung (mittels Klemmdichtungswülsten 15, 16 und diese übergreifender Ringnuten 17a, 18a der Fixierringe 17, 18) eine äußerst zuverlässige mechanische Festlegung und außerdem innere Abdichtung der Rückseiten 8b bzw. 9b der Dichtungselemente 8, 9 an den Böden 10a, 11a der zugehörigen Gehäuseausnehmungen 10 bzw. 11 erreicht.

Fig.4 zeigt eine gleichartige Dichtungssituation wie Fig.3, wobei die Schieberplatte jedoch so weit - senkrecht zur Zeichenebene - verschoben worden ist, daß der freie Fördergutdurchgang durch die Rohranschlüsse 5, 6 durch einen vollwandigen Schieberplattenabschnitt 3c zuverlässig versperrt ist, d. h. die Schieberplatte 3 befindet sich in der Absperrstellung, während die Dichtungsflächen 8a, 9a der Dichtungselemente 8, 9 unter hohem Druck ganzflächig an den Außenseiten der Schieberplatte 3 anliegen.

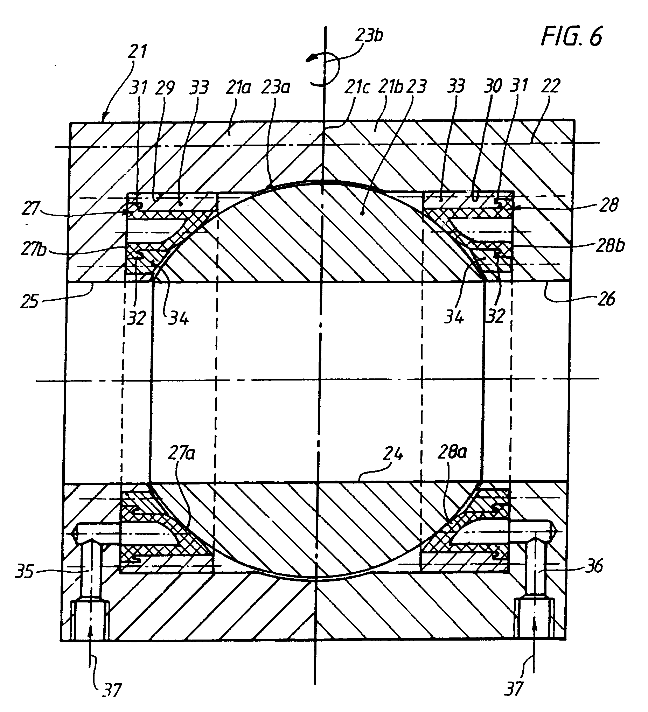

Eine Ausführungsvariante des bisher anhand der Fig.1 bis 4 beschriebenen Ausführungsbeispieles eines Absperrschiebers ist in Fig.5 veranschaulicht. Der Einfachheit halber sind in dieser Fig.5 alle gleichartig zum Beispiel der Fig.1 bis 4 erläuterten Vorrichtungsteile mit denselben Bezugszeichen bzw. unter Hinzufügung eines Striches versehen, so daß dazu im allgemeinen keine detaillierten Erläuterungen erforderlich sind.

Bei dieser Ausführungsvariante (Fig.5) ist das Schieberghäuse 1' wiederum mit zwei lösbar verschraubten Gehäuseteilen 1'a und 1'b ausgeführt, zwischen denen die Schieberplatte 3 senkrecht zur Zeichenebene zwischen ihrer Absperrstellung (ähnlich Fig.4) und ihrer Freigabestellung (in Fig.5 veranschaulicht) verschoben werden kann, wobei in dieser Freigabestellung die Durchgangsöffnung 7 den freien Fördergutdurchgang durch die Eingangs- und Ausgangs-Rohranschlüsse 5, 6 gestattet. Die ringförmigen Dichtungselemente 8, 9 sind ebenfalls in gleicher Weise wie zuvor geschildert ausgeführt und jeweils mittels eines äußeren Fixierringes 17 einerseits sowie mittels eines inneren Fixierringes 18' andererseits in der zugehörigen Gehäuseausnehmung 10, 11 festgelegt, und sie können auch in gleicher Weise mittels eines Druckmediums aufgebläht werden, um den Dichtungseingriff mit der Schieberplatte 3 herzustellen, wie es anhand der Fig.1 bis 4 erläutert worden ist.

Der wesentliche Unterschied zwischen dem ersten Ausführungsbeispiel gemäß den Fig.1 bis 4 und dieser Ausführungsvariante gemäß Fig.5 besteht darin, daß in dieser Ausführungsvariante (Fig.5) die inneren Fixierringe 18' an ihrem Innenumfang durch einen rohrförmigen Ansatz 18'a in der Weise geradlinig axial nach außen verlängert sind, daß dadurch gleichzeitig auch Verschleißbuchsen gebildet werden, d.h. im Gegensatz zum Beispiel der Fig.1 bis 4, in dem gesondert zu den inneren Fixierringen 18 angeordnete Verschleißbuchsen vorgesehen sind, sind in diesem Falle die Verschleißbuchsen 18'a einstückig mit den ihnen benachbarten inneren Fixierringen 18' ausgeführt, wobei dann hierdurch wiederum der Eingangs-Rohranschluß 5 und der Ausgangs-Rohranschluß 6 gebildet sind.

Die erfindungsgemäße Absperrvorrichtung kann in bezug auf die Abdichtungsmöglichkeiten ihres Absperrorgans in ähnlich vorteilhafter Weise auch so ausgeführt sein, daß das Absperrorgan in Form eines rotationssymmetrischen Absperrkörpers ausgebildet ist, wie es beispielsweise bei einem Drehschieber, Kugelhahn oder dgl. der Fall ist. Ein Beispiel einer solchen Ausführungsform sei nachfolgend anhand Fig.6 erläutert.

In Fig.6 sei angenommen, daß es sich bei dieser Absperrvorrichtung um ein Kugelventil bzw. einen Kugelhahn handelt. Ähnlich wie beim ersten Ausführungsbeispiel besitzt auch diese Kugelventil ein Gehäuse 21, das zwei etwa gleich große Gehäuseteile 21a und 21b aufweist, die etwa im Bereich der Mittelebene 21c aneinander anliegen und - wie bei 22 strichpunktiert angedeutet - durch Verschraubung miteinander verbunden sein können. In diesem Gehäuse 21 ist als Absperrorgan ein rotationssymmetrischer Absperrkörper 23 angeordnet, der eine vorzugsweise diametrale Durchgangsbohrung 24 aufweist, die in ihrem lichten Querschnitt mit den lichten Querschnitten eines Eingangs-Rohranschlusses 25 und eines Ausgangs-Rohranschlusses 26 übereinstimmt und dazu eingestellt werden kann, die koaxial einander gegenüberliegend im Gehäuse 21 ausgebildet sind. Der Absperrkörper 23 ist in an sich bekannter und daher nicht näher veranschaulichter Weise im Gehäuse 21 derart drehbar gelagert, daß er um eine quer zur Durchgangsöffnung 24 verlaufende - in Fig.6 nur strichpunktiert angedeutete - Drehachse 23b gedreht bzw. verstellt werden kann. Auf diese Weise wird auch bei diesem Kugelventil wiederum sichergestellt, daß der sich im Bereich zwischen den Eingangs- und Ausgangs-Rohranschlüssen 25, 26 befindliche Absperrkörper 23 zwischen der in Fig.6 veranschaulichten Freigabestellung für den freien Fördergutdurchgang und einer Absperrstellung bewegt bzw. verdreht werden kann, in der der freie Fördergutdurchgang der Rohranschlüsse 25, 26 versperrt ist.

Auch bei dieser Ausführungsform gemäß Fig.6 sind in den beiden Gehäuseteilen 21a und 21b zwei sich einander sowie den Außenseiten 23a des Absperrkörpers 23 gegenüberliegende, ringförmig umlaufende Dichtungselemente 27, 28 in zum Absperrkörper 23 hin offenen, ringförmigen Ausnehmungen 29, 30 der Gehäuseteile 21a bzw. 21b angeordnet. Diese Dichtungselemente 27 und 28 umgeben die Eingangs- und Ausgangs-Rohranschlüsse 25, 26 wiederum in der Nähe des Absperrkörpers 23 ringförmig, und sie sind ebenfalls aufblähbar aus gummielastischem Werkstoff sowie im Prinzip gleichartig als Hohlprofile ausgeführt, wie es im Zusammenhang mit der mit den Dichtungselementen 8 und 9 des ersten Ausführungsbeispieles im einzelnen erläutert worden ist, lediglich mit dem kleinen Unterschied, daß die mit den Außenseiten 23a des Absperrkörpers 23 in Dichtungseingriff drückbaren Dichtungsflächen 27a bzw. 28a dieser Dichtungselemente 27, 28 entsprechend der kugelförmigen Außenkontur des Absperrkörpers 23 angepaßt sind. Von Bedeutung ist ferner, daß auch bei diesem Ausführungsbeispiel gemäß Fig.6 die Dichtungselemente 27, 28 im Bereich ihrer Rückseiten 27b bzw. 28b wiederum äußere und innere, flanschartig vorstehende Klemmdichtungswulste 31 bzw. 32 aufweisen. Und über diese Klemmdichtungswülste 31, 32 sind die Dichtungselemente 27, 28 dann ebenfalls mit Hilfe von eng anliegenden, festklemmenden inneren und äußeren Fixierringen 33, 34 in genau der gleichen Weise in der zugehörigen Gehäuseausnehmung 29 bzw. 30 festgelegt, wie es im einzelnen anhand Fig.1 erläutert worden ist.

In das Innere dieser Dichtungselemente 27 und 28 kann über Druckluftkanäle 35, 36 innerhalb der Gehäuseteile 21a, 21b dann wiederum ein Druckmedium, vorzugsweise Druckluft (Pfeile 37) eingeführt werden, um diese Dichtungselemente 27, 28 aufzublähen und ihre Dichtungsflächen 27a und 28a fest und zuverlässig gegen die Außenseiten 23a des Absperrkörpers zu drücken.

Schließlich besteht auch noch die Möglichkeit, bei allen geschilderten Ausführungsformen die inneren Fixierringe, also die Fixierringe 18, 18' und 34, allein oder mit ihnen zugeordneten Verschleißbuchsen so auszubilden bzw. anzuordnen, daß sie gleichzeitig eine Art Gutabstreifer darstellen, um beim Verstellen des Absperrorgans von dessen Außenseiten eventuell anhaftendes Fördergut abzustreifen. In der einfachsten Ausführungsart können diese Fixierringe - wie anhand der zeichnerischen Darstellungen leicht vorstellbar ist - besonders eng am Absperrorgan anliegend vorgesehen sein, während eine andere Möglichkeit etwa darin bestehen kann, daß diese inneren Fixierringe mit einer Art Abstreiflippe geformt sind, die eng an der entsprechenden Außenseite des Absperrorgans anliegt.

## Patentansprüche

1. Absperrvorrichtung zum Einbau in eine pneumatische Förderleitung für unter Druck stehendes, pulverförmiges bis feinkörniges Fördergut, enthaltend
a) ein Gehäuse (1, 21), in dem ein Eingangs-Rohranschluß (5, 25) und ein Ausgangs-Rohranschluß (6, 26) koaxial einander gegenüberliegend ausgebildet sind,
b) ein Absperrorgan (3, 23), das eine im lichten Querschnitt den Eingangs- und Ausgangs-Rohranschlüssen entsprechende Durchgangsöffnung (7, 24) aufweist und das im Bereich zwischen diesen Eingangs- und Ausgangs-Rohranschlüssen in dem Gehäuse derart angeordnet ist, daß es zwischen einer Absperrstellung und einer Freigabestellung für den freien Fördergutdurchgang durch diese Rohranschlüsse bewegbar ist,
c) mehrere die Eingangs- und Ausgangs-Rohranschlüsse (5, 6, 25, 26) in der Nähe des Absperrorgans (3, 23) ringförmig umgebende, aufblähbare, gummielastische Dichtungselemente (8, 9, 27, 28), die in zu den Außenseiten (3a, 3b, 23a) des Absperrorgans hin offenen, ringförmigen Ausnehmungen (10, 11, 29, 30) im Gehäuse (1) festgelegt sind, wobei diese Dichtungselemente in der Weise als Hohlprofile ausgebildet sind, daß sie jeweils eine geschlossene Dichtungsfläche (8a, 9a, 27a, 28a) sowie eine entgegengesetzte, wenigstens teilweise offene Rückseite (8b, 9b, 27b, 28b) aufweisen, die am Boden der ringförmigen Gehäuseausnehmung anliegt und über die von diesem Ausnehmungsboden her ein zum Andrücken der Dichtungsflächen gegen die Außenseiten des Absperrorgans dienendes Druckmedium in das Dichtungselement einführbar ist,
gekennzeichnet durch folgende Merkmale:
d) jedes Dichtungselement (8, 9, 27, 28) weist im Bereich seiner Rückseite (8b, 9b, 27b, 28b) sowohl an seiner Innenumfangsseite (8c, 9c) als auch an seiner Außenumfangsseite (8d, 9d) je einen umlaufenden Klemmdichtungswulst (15, 16, 31, 32) auf;
e) an der Außenumfangsseite und an der Innenumfangsseite jedes Dichtungselements (8, 9, 27, 28) liegt je ein Fixierring (17, 18, 33, 34) eng an, wobei beide Fixierringe die Klemmdichtungswülste fest übergreifende Ringnuten (17a, 18a) aufweisen und lösbar in der zugehörigen Gehäuseausnehmung festgelegt sind.

2. Absperrvorrichtung nach Anspruch 1, dadurch gekennzeichnet, daß jedes Dichtungselement (8, 9) im druckentspannten Zustand zusammen mit den an seinen beiden Umfangsseiten (8c, 8d, 9c, 9d) eng anliegenden Fixierringen (17, 18) einen Gesamtquerschnitt bilden, der den lichten Querschnitt der zugehörigen Gehäuseausnehmung (10, 11) vollständig und bündig ausfüllt.

3. Absperrvorrichtung nach Anspruch 2, dadurch gekennzeichnet, daß die maximale axiale Abmessung (a) der Fixierringe (17, 18) mit der Tiefe der Gehäuseausnehmungen (10, 11) übereinstimmt und die Klemmdichtungswülste (15, 16) jedes Dichtungselements (8, 9) von den Ringnuten (17a, 18a) der zugehörigen Fixierringe komprimiert und abdichtend festgeklemmt sind.

4. Absperrvorrichtung nach Anspruch 1, dadurch gekennzeichnet, daß die Fixierringe (17, 18, 33, 34) in den zugehörigen Gehäuseausnehmungen (10, 11, 29, 30) verschraubt sind.

5. Absperrvorrichtung nach Anspruch 1, dadurch gekennzeichnet, daß jeder Fixierring einstückig ausgeführt ist.

6. Absperrvorrichtung nach Anspruch 1, dadurch gekennzeichnet, daß jeder Fixierring aus wenigstens zwei Ringsektoren gebildet ist.

7. Absperrvorrichtung nach Anspruch 1, wobei jeder Rohranschluß (5, 6) im Gehäuse (1) in Form einer auswechselbaren Verschleißbuchse ausgebildet ist, dadurch gekennzeichnet, daß die Verschleißbuchsen an der Innenumfangsseite des benachbarten inneren Fixierringes (18) eng anliegend angeordnet sind.

8. Absperrvorrichtung nach Anspruch 1, wobei jeder Rohranschluß (5, 6) im Gehäuse (1') in Form einer auswechselbaren Verschleißbuchse ausgebildet ist, dadurch gekennzeichnet, daß jede Verschleißbuchse mit dem ihr benachbarten inneren Fixierring (18') einstückig ausgeführt ist.

9. Absperrvorrichtung nach Anspruch 8, dadurch gekennzeichnet, daß die inneren Fixierringe und die Verschleißbuchsen unter gleichzeitiger Ausbildung eines Abstreifers an der Außenseite des Absperrorgans eng anliegend vorgesehen sind.

10. Absperrvorrichtung nach Anspruch 1, gekennzeichnet durch die Ausbildung in Form eines Absperrschiebers mit hin- und herverschiebbarer Schieberplatte (3) als Absperrorgan.

11. Absperrvorrichtung nach Anspruch 1, dadurch gekennzeichnet, daß das Absperrorgan in Form eines rotationssymetrischen Absperrkörpers (23) ausgebildet ist, der um eine quer zur Durchgangsöffnung (24) verlaufende Drehachse (23b) verstellbar ist.

## Claims

1. Shut-off device for installation into a pneumatic conveying pipe for powdery to fine-grained material for conveying, comprising
a) a housing (1, 21) in which an inlet pipe connection (5,25) and an outlet pipe connection (6, 26) are constructed so that they lie coaxially opposite one another,
b) a shut-off element (3, 23) which has a through opening (7, 24) corresponding in its internal cross-section to the inlet and outlet pipe connections and which in the region between these inlet and outlet pipe connections is disposed in the housing in such a way that it is movable between a shut-off position and an open position for the free passage of material for conveying through these pipe connections,
c) a plurality of inflatable rubber-elastic sealing elements 8, 9, 27, 28) which surround the inlet and outlet pipe connections (5, 6, 25, 26) like a ring in the vicinity of the shut-off element (3, 23) and which are fixed in annular recesses (10, 11, 29, 30) in the housing (1) which are open towards the outer faces (3a, 3b, 23a, 23b) of the shut-off element, these sealing elements being constructed as hollow sections in such a way that they each have a closed sealing surface (8a, 9a, 27a, 28a) as well as an opposed rear face (8b, 9b, 27b, 28b) which is at least partially open and rests on the base of the annular housing recess and through which a pressure medium which serves to press the sealing surfaces against the outer faces of the shut-off element can be introduced into the sealing element from the base of the recess,
characterised by the following features:
d) in the region of the rear face (8b, 9b, 27b, 28b) thereof each sealing element (8, 9, 27, 28) has a clamping seal bead (15, 16, 31, 32) running round both on its inner peripheral face (8c, 9c) and also on its outer peripheral face (8d, 9d);
e) a fixing ring lies in each case close against the outer peripheral face and against the inner peripheral face of each sealing element (8, 9, 27, 28), and these two fixing rings have annular grooves (17a, 18a) which engage firmly over the clamping seal beads lying adjacent to them, these fixing rings being releasably fixed in the associated housing recess.

2. Shut-off device as claimed in Claim 1, characterised in that each sealing element (8, 9) in the pressure-relieved state together with the fixing rings (17, 18) resting closely on its two peripheral faces (8c, 8d, 9c, 9d) form an overall cross-section which fills the internal cross-section of the associated housing recess (10, 11) completely and flush.

3. Shut-off device as claimed in Claim 2, characterised in that the maximum axial dimension (a) of the fixing rings (17, 18) corresponds to the depth of the housing recesses (10, 11) and the clamping seal beads (15, 16) of each sealing element (8, 9) are compressed and clamped so as to form a seal by the annular grooves (17a, 18a) of the associated fixing rings.

4. Shut-off device as claimed in Claim 1, characterised in that the fixing rings (17, 18, 33, 34) are screwed in the associated housing recesses (10, 11, 29, 30).

5. Shut-off device as claimed in Claim 1, characterised in that each fixing ring is constructed in one piece.

6. Shut-off device as claimed in Claim 1, characterised in that each fixing ring is formed by at least two ring sectors.

7. Shut-off device as claimed in Claim 1, in which each pipe connection (5, 6) in the housing (1) is constructed in the form of a replaceable wear sleeve, characterised in that the wear sleeves are disposed so that they rest closely on the inner peripheral face of the adjacent inner fixing ring (18).

8. Shut-off device as claimed in Claim 1, in which each pipe connection (5, 6) in the housing (1') is constructed in the form of a replaceable wear sleeve, characterised in that each wear sleeve is constructed in one piece with the inner fixing ring (18') adjacent to it.

9. Shut-off device as claimed in Claim 8, characterised in that the inner fixing rings and the wear sleeves rest closely on the outer face of the shut-off element and simultaneously form a scraper.

10. Shut-off device as claimed in Claim 1, characterised by the construction in the form of a shut-off gate valve with a gate-valve plate (3) which can be moved to and fro as the shut-off element.

11. Shut-off device as claimed in Claim 1, characterised in that the shut-off element is constructed in the form of a rotationally symmetrical shut-off body (23) which is movable about an axis of rotation (23b) running obliquely with respect to the through opening (24).

## Revendications

1. Dispositif d'arrêt destiné à être monté dans une canalisation de transport pneumatique de produit pulvérulent à granulométrie fine qui est sous pression, comprenant :
a) une cage (1, 21) dans laquelle un raccord tubulaire d'entrée (5, 25) et un raccord tubulaire de sortie (6, 26) sont réalisés coaxialement en face l'un de l'autre,
b) un organe d'arrêt (3, 23) qui comporte un trou de passage (7, 24) ayant une section libre correspondant à celle des raccords tubulaires d'entrée et de sortie et qui est disposé dans la cage entre ces raccords tubulaires d'entrée et de sortie de manière qu'il soit déplaçable entre une position d'arrêt et une position dans laquelle il libère le passage libre du produit transporté dans ces raccords tubulaires,
c) plusieurs éléments d'étanchéité gonflables (8, 9, 27, 28) ayant l'élasticité du caoutchouc et formant des anneaux qui entourent les raccords tubulaires d'entrée et de sortie (5, 6, 25, 26) à proximité de l'organe d'arrêt (3, 23) et qui sont fixés dans des évidements annulaires (10, 11, 29, 30) de la cage (1) qui sont ouverts sur les côtés extérieurs (3a, 3b, 23) de l'organe d'arrêt, chacun de ces éléments d'étanchéité étant conformé en profilé creux de manière qu'il comprenne une surface fermée d'étanchéité (8a, 9a, 27a, 28a) ainsi qu'un côté arrière opposé, au moins partiellement ouvert (8b, 9b, 27b, 28b), qui est appliqué contre le fond de l'évidement annulaire de la cage et par lequel un fluide d'étanchéité servant à serrer les surfaces d'étanchéité contre les côtés extérieurs de l'organe d'arrêt peut être introduit par ce fond de l'évidement dans l'élément d'étanchéité,
caractérisé par les particularités suivantes :
d) chaque élément d'étanchéité (8, 9, 27, 28) comporte sur le côté arrière (8b, 9b, 27b, 28b) un bourrelet circonférentiel d'étanchéité par serrage (15, 16, 31, 32) aussi bien sur son côté circonférentiel intérieur (8c, 9c) que sur son côté circonférentiel extérieur (8d, 9d),
e) un anneau de fixation (17, 18, 33, 34) est appliqué étroitement d'une part contre le côté circonférentiel extérieur et d'autre part contre le côté circonférentiel intérieur de chaque élément d'étanchéité (8, 9, 27, 28), les deux anneaux de fixation comportant des rainures annulaires (17a, 18a) qui chapeautent étroitement les bourrelets d'étanchéité par serrage et étant fixées de manière amovible dans l'évidement correspondant de la cage.

2. Dispositif d'arrêt selon la revendication 1, caractérisé en ce que, lorsqu'il est à l'état décomprimé, chaque élément d'étanchéité (8, 9) forme avec les anneaux de fixation (17, 18) étroitement appliqués contre ses deux côtés circonférentiels (8c, 8d, 9c, 9d) une section globale qui remplit totalement et à fleur la section libre de l'évidement correspondant (10, 11) de la cage.

3. Dispositif d'arrêt selon la revendication 2, caractérisé en ce que la cote axiale maximale (a) des anneaux de fixation (17, 18) coïncide avec la profondeur des évidements (10, 11) de la cage et les bourrelets d'étanchéité par serrage (15, 16) de chaque élément d'étanchéité (8, 9) sont comprimés par les rainures annulaires (17a, 18a) des anneaux correspondants de fixation et sont étroitement serrés de manière étanche.

4. Dispositif d'arrêt selon la revendication 1, caractérisé en ce que les anneaux de fixation (17, 18, 33, 34) sont fixés par boulonnage dans les évidements correspondants (10, 11, 29, 30) de la cage.

5. Dispositif d'arrêt selon la revendication 1, caractérisé en ce que chaque anneau de fixation est réalisé en une pièce.

6. Dispositif d'arrêt selon la revendication 1, caractérisé en ce que chaque anneau de fixation est formé d'au moins deux secteurs annulaires.

7. Dispositif d'arrêt selon la revendication 1, dans lequel chaque raccord tubulaire (5, 6) placé dans la cage (1) est réalisé sous la forme d'un manchon d'usure interchangeable, caractérisé en ce que les manchons d'usure sont disposés de manière à être étroitement appliqués contre le côté circonférentiel intérieur de l'anneau intérieur voisin de fixation (18).

8. Dispositif d'arrêt selon la revendication 1, dans lequel chaque raccord tubulaire (5, 6) placé dans la cage (1') est réalisé sous la forme d'un manchon interchangeable d'usure, caractérisé en ce que chaque manchon d'usure est réalisé en une pièce avec l'anneau intérieur voisin de fixation (18').

9. Dispositif d'arrêt selon la revendication 8, caractérisé en ce que les anneaux intérieurs de fixation et les manchons d'usure sont prévus de manière qu'ils constituent également une racle étroitement appliquée contre le côté extérieur de l'organe d'arrêt.

10. Dispositif d'arrêt selon la revendication 1, caractérisé par la réalisation sous forme d'une vanne d'arrêt dont l'organe d'arrêt est constitué d'une plaque coulissante (3) déplaçable alternativement.

11. Dispositif d'arrêt selon la revendication 1, caractérisé en ce que l'organe d'arrêt est réalisé sous la forme d'un corps d'arrêt symétrique de révolution (23) qui est déplaçable autour d'un axe de rotation (23b) qui est perpendiculaire au trou de passage (24).
